# EUROPÄISCHE PATENTANMELDUNG

(11) **EP 1 074 817 A1**
(43) Veröffentlichungstag der Anmeldung: **07.02.2001**
(21) Anmeldenummer: 00114723.0
(22) Anmeldetag: 08.07.2000
(51) Int. Cl.: G01C 21/36

(54) **Ein/Ausgabevorrichtung für ein in einem Fahrzeug angeordneten Gerät, insbesondere Fahrzeug-Navigationsgerät**

(30) Priorität: 31.07.1999 DE 19936197
(71) Anmelder: Mannesmann VDO Aktiengesellschaft, 60388 Frankfurt am Main (DE)
(72) Erfinder: Schroeder, Rudolf, 52078 Aachen (DE)
(74) Vertreter: Klein, Thomas, Dipl.-Ing.

(57) **Zusammenfassung**

Eine Ein/Ausgabevorrichtung hat ein Gehäuse (1), in welchem eine Tastatur (4), ein Display (3) und ein Lautsprecher (6) integriert sind. Dieses Gehäuse (1) ist an seiner Unterseite zum Verbinden mit einer Armaturentafel durch Verkleben ausgebildet.

## Beschreibung

Die Erfindung betrifft eine Ein/Ausgabevorrichtung für ein in einem Fahrzeug angeordneten Gerät, insbesondere Fahrzeug-Navigationsgerät, mit einer Tastatur, einem Display und einem Lautsprecher.

Bei den heute bekannten Ein/Ausgabevorrichtungen ist die Tastatur meist verstellbar auf einem flexiblen Träger angeordnet. Das Display und der Lautsprecher sind als separate Bauteile in der Armaturentafel eingebaut. Deshalb müssen diese Teile dem jeweiligen Kraftfahrzeug angepasst sein, in welchem die Ein/Ausgabevorrichtung eingebaut werden soll. Weiterhin bereitet die Verkabelung der einzelnen Komponenten der Ein/Ausgabevorrichtung Schwierigkeiten, insbesondere dann, wenn das Gerät nachträglich in ein Kraftfahrzeug eingebaut werden soll.

Der Erfindung liegt das Problem zugrunde, eine Ein/Ausgabevorrichtung der eingangs genannten Art so zu gestalten, dass es mit möglichst geringem Aufwand einfach in ein Kraftfahrzeug eingebaut werden kann.

Dieses Problem wird erfindungsgemäß dadurch gelöst, dass die Tastatur, das Display und der Lautsprecher in einem gemeinsamen Gehäuse angeordnet sind, welches zum Verbinden mit einer Armaturentafel eine Befestigungsfläche aufweist.

Durch diese Gestaltung entsteht eine Einheit, die als Ganzes in ein Kraftfahrzeug, beispielsweise auf die Oberseite der Armaturentafel, eingebaut werden kann. Da alle erforderlichen Komponenten in einem gemeinsamen Gehäuse integriert sind, ist lediglich die Einheit mit den erforderlichen Datenkabeln und Energieversorgungskabeln zu verbinden.

Die Ein/Ausgabevorrichtung kann sehr einfach von oben her auf die Armaturentafel aufgesetzt und mit ihr beispielsweise durch Kleben verbunden werden, wenn gemäß einer vorteilhaften Weiterbildung der Erfindung die Unterseite des Gehäuses die Befestigungsfläche aufweist.

Die Ein/Ausgabevorrichtung vermag auch bei einer gekrümmt verlaufenden Armaturentafel vollflächig auf ihr aufzusitzen und lässt sich deshalb zuverlässig haltend mit ihr durch Kleben verbinden, wenn die Befestigungsfläche der Kontur der Armaturentafel entsprechend gekrümmt verläuft.

Eine Anpassung an unterschiedliche Konturen der Armaturentafel bei verschiedenen Fahrzeugtypen ist möglich, wenn gemäß einer anderen Ausgestaltung der Erfindung die Befestigungsfläche an einem austauschbar mit dem Gehäuse verbundenen Unterteil vorgesehen ist.

Die Herstellung und Bereithaltung unterschiedlicher Unterteile für unterschiedliche Armaturentafeln wird unnötig, wenn die Befestigungsfläche Verstellelemente zum Einstellen der Krümmung der Befestigungsfläche aufweist.

Besonders einfach sind die Verstellelemente gestaltet, wenn sie durch Stellschrauben gebildet sind, welche mehr oder weniger weit auf fest an dem Gehäuse angebrachte, nach unten ragende Gewindestifte aufschraubbar ausgebildet sind und die sich mit jeweils einem Kopf an einer die Befestigungsfläche aufweisenden Wand abstützen.

Die Fläche, auf der die Ein/Ausgabevorrichtung befestigt wird, braucht nicht so zu verlaufen, dass sich unmittelbar eine richtige Winkelausrichtung des Displays zum Fahrer hin ergibt, wenn das Display auf einer relativ zu dem Gehäuse winkelverstellbaren Klappe angebracht ist, weil man dann nach dem Befestigen der Ein/Ausgabevorrichtung das Display in eine für den Fahrer optimale Winkellage schwenken kann.

Die das Display tragende Klappe vermag im unbenutzten Zustand die Tastatur vor Verschmutzung zu schützen, wenn die Klappe zum Abdecken der Tastatur bemessen und angeordnet ist.

Der Fahrer braucht bei Benutzung der Ein/Ausgabevorrichtung seine Hände nicht vom Lenkrad zu nehmen, wenn das Gehäuse zusätzlich ein Mikrofon als Eingabemittel aufweist, das mit einer nicht dargestellten Spracherkennungsvorrichtung verbunden ist.

Die Erfindung lässt verschiedene Ausführungsformen zu. Zur weiteren Verdeutlichung ihres Grundprinzips ist eine davon in der Zeichnung dargestellt und wird nachfolgend beschrieben. Die Zeichnung zeigt in
- Fig.1: eine perspektivische Darstellung einer erfindungsgemäßen Ein/Ausgabevorrichtung am Beispiel eines Fahrzeug-Navigationsgeräts,
- Fig.2: einen Schnitt durch einen Teilbereich der Ein/Ausgabevorrichtung.

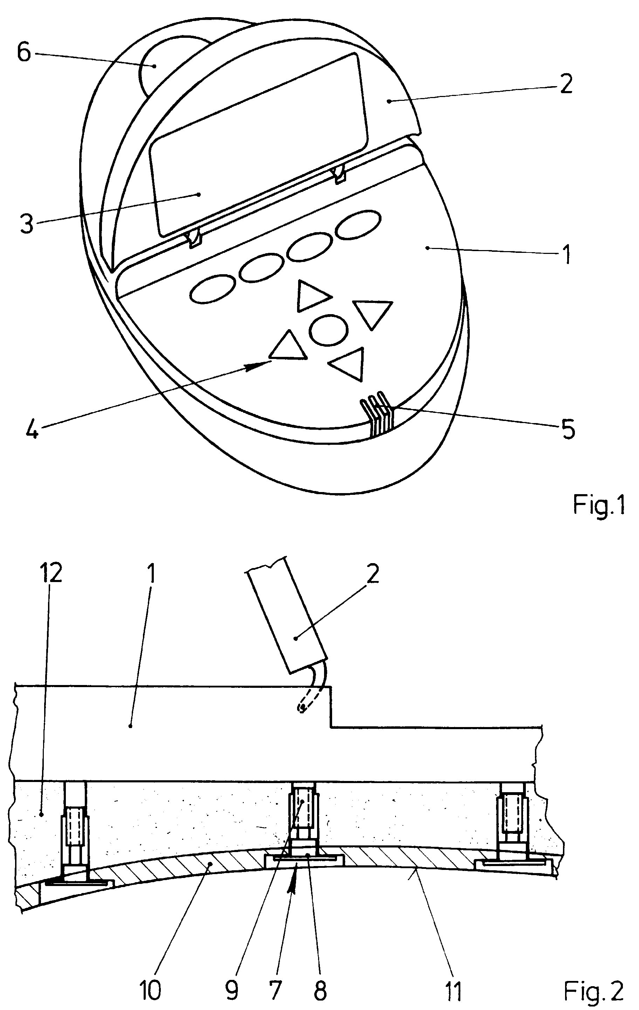

Das in Figur 1 dargestellte Fahrzeug-Navigationsgerät hat ein von oben her gesehen ovales Gehäuse 1, auf dessen Oberseite eine Klappe 2 mit einem Display 3 angeordnet ist. Diese Klappe 2 ist so mit dem Gehäuse 1 verbunden, dass man sie in ihrer Winkellage zum Gehäuse 1 in festgelegten Schritten verstellen kann.

Vor der Klappe 2 erkennt man auf der Oberseite des Gehäuses 1 eine Tastatur 4, mit der man manuell die zum Arbeiten des Fahrzeug-Navigationsgerätes erforderlichen Daten eingeben kann. Zusätzlich hat die Ein/Ausgabevorrichtung an seiner Vorderseite ein Mikrofon 5, welches eine Spracheingabe erlaubt. Zur Ausgabe von Navigationsbefehlen hat das Fahrzeug-Navigationsgerät an seiner Rückseite einen Lautsprecher 6. Die Klappe 2 ist so bemessen und mit dem Gehäuse 1 verbunden, dass man sie bei Nichtgebrauch auf die Tastatur 4 klappen kann.

Die Figur 2 zeigt, dass an der Unterseite des Gehäuses 1 mehrere Verstellelemente 7 vorhanden sind, welche jeweils aus einer Stellschraube 8 und einem am Gehäuse 1 befestigten, senkrecht nach unten weisenden Gewindestift 9 bestehen. Die Stellschraube 8 stützt sich an einer flexiblen Wand 10 ab, die an ihrer Unterseite eine Befestigungsfläche 11 aufweist, welche zum Verkleben mit einer nicht gezeigten Armaturentafel ausgebildet ist. Zwischen der Wand 10 und der Unterseite des Gehäuses 1 befindet sich eine elastische Schaumstoffschicht 12. Indem man die Stellschrauben 8 mehr oder weniger weit auf die Gewindestifte 9 aufschraubt, kann man die Wand 10 mehr oder weniger weit zur Unterseite des Gehäuses 1 hin bewegen und dadurch die Krümmung der Wand 10 und damit der Befestigungsfläche 11 verändern.

## Patentansprüche

1. Ein/Ausgabevorrichtung mit einer Tastatur, einem Display und einem Lautsprecher, insbesondere für ein Fahrzeug-Navigationsgerät, **dadurch gekennzeichnet,** dass die Tastatur (4), das Display (3) und der Lautsprecher (6) in einem gemeinsamen Gehäuse (1) angeordnet sind, welches zum Verbinden mit einer Armaturentafel eine Befestigungsfläche (11) aufweist.

2. Ein/Ausgabevorrichtung nach Anspruch 1, **dadurch gekennzeichnet,** dass die Unterseite des Gehäuses (1) die Befestigungsfläche (11) aufweist.

3. Ein/Ausgabevorrichtung nach den Ansprüchen 1 oder 2, **dadurch gekennzeichnet,** dass die Befestigungsfläche (11) der Kontur der Armaturentafel entsprechend gekrümmt verläuft.

4. Ein/Ausgabevorrichtung nach zumindest einem der vorangehenden Ansprüche, **dadurch gekennzeichnet,** dass die Befestigungsfläche (11) an einem austauschbar mit dem Gehäuse (1) verbundenen Unterteil vorgesehen ist.

5. Ein/Ausgabevorrichtung nach zumindest einem der vorangehenden Ansprüche, **dadurch gekennzeichnet,** dass die Befestigungsfläche (11) Verstellelemente (7) zum Einstellen der Krümmung der Befestigungsfläche (11) aufweist.

6. Ein/Ausgabevorrichtung nach Anspruch 5, **dadurch gekennzeichnet,** dass die Verstellelemente (7) durch Stellschrauben (8) gebildet sind, welche mehr oder weniger weit auf fest an dem Gehäuse (1) angebrachte, nach unten ragende Gewindestifte (9) aufschraubbar ausgebildet sind und die sich mit jeweils einem Kopf an einer die Befestigungsfläche (11) aufweisenden Wand (10) abstützen.

7. Ein/Ausgabevorrichtung nach zumindest einem der vorangehenden Ansprüche, **dadurch gekennzeichnet,** dass das Display (3) auf einer relativ zu dem Gehäuse (1) winkelverstellbaren Klappe (2) angebracht ist.

8. Ein/Ausgabevorrichtung nach Anspruch 8, **dadurch gekennzeichnet,** dass die Klappe (2) in Schritten relativ zu dem Gehäuse verstellbar ist.

9. Ein/Ausgabevorrichtung nach zumindest einem der vorangehenden Ansprüche, **dadurch gekennzeichnet,** dass die Klappe (2) zum Abdecken der Tastatur (4) bemessen und angeordnet ist.

10. Ein/Ausgabevorrichtung nach zumindest einem der vorangehenden Ansprüche, **dadurch gekennzeichnet,** dass das Gehäuse (1) zusätzlich ein Mikrofon (5) als Eingabemittel aufweist.
